(19) Europäisches Patentamt / European Patent Office / Office européen des brevets

(11) **EP 2 054 555 B1**

(12) **EUROPEAN PATENT SPECIFICATION**

(45) Date of publication and mention
of the grant of the patent:
**01.11.2017 Bulletin 2017/44**

(21) Application number: **07872743.5**

(22) Date of filing: **23.08.2007**

(51) Int Cl.:
***E02F 5/02*** (2006.01)

(86) International application number:
**PCT/US2007/076648**

(87) International publication number:
**WO 2008/091395 (31.07.2008 Gazette 2008/31)**

(54) **EXCAVATOR 3D INTEGRATED LASER AND RADIO POSITIONING GUIDANCE SYSTEM**

IN EINEN BAGGER INTEGRIERTER 3D-LASER UND FUNKPOSITIONIERUNGSFÜHRUNGSSYSTEM

LASER INTÉGRÉ TRIDIMENSIONNEL D'UNE EXCAVATRICE ET SYSTÈME DE GUIDAGE DE POSITIONNEMENT RADIO

(84) Designated Contracting States:
**CH DE LI**

(30) Priority: **24.08.2006 US 509995**

(43) Date of publication of application:
**06.05.2009 Bulletin 2009/19**

(73) Proprietor: **Caterpillar Trimble Control Technologies LLC**
**Dayton, OH 45424-1099 (US)**

(72) Inventor: **NICHOLS, Mark, E.**
**Christchurch (NZ)**

(74) Representative: **Käck, Stefan et al**
**Kahler Käck Mollekopf**
**Partnerschaft von Patentanwälten mbB**
**Vorderer Anger 239**
**86899 Landsberg/Lech (DE)**

(56) References cited:
**WO-A2-2006/062769**  **JP-A- 2006 194 823**
**US-A- 5 404 661**  **US-A- 5 438 771**
**US-A1- 2005 131 610**  **US-B2- 6 782 644**
**US-B2- 6 782 644**

EP 2 054 555 B1

## Description

TECHNICAL FIELD

The current invention relates to position tracking and machine control systems, and, more specifically, to a combination of laser systems and radio positioning systems configured to complement each other in order to optimize the tracking and machine control capabilities of prior art systems.

BACKGROUND ART

In recent times there have been advances in the area of radio ranging or pseudolite machine control systems. However, the radio ranging or pseudolite machine control systems have limited, up to centimeter accuracy.

For example, Trimble introduced a family of machine control systems including the GCS300 with a single elevation control, the GCS400 having a dual elevation control, the GCS500 with a cross slope control, the GCS600 having a cross slope and elevation control, and finally, the GCS900 that provides a full 3D control up to centimeter accuracy. In another example, Trimble also introduced the SiteVision HEX machine control systems. Trimble's version 5.0 SiteVision System comprises a 3D machine guidance and control system for use on dozers, scrapers, motor graders, compactors, and excavators. The SiteVision HEX machine control systems use GPS technology. A GPS receiver installed on the dozer or grader continually computes the exact position of GPS antennas installed on each end of the machine's blade. An on-board computer determines the exact position of each blade tip and compares the positions to design elevation. It then computes the cut or fills to grade. This information is displayed on the in-cab screen, and the cut/fill data is passed to the SiteVision light bars, which guide the operator up or down for grade and right or left of a defined alignment.

In recent times there have been also advances in rotating laser systems including plane lasers and fan laser systems. Plane lasers provide a reference plane of light. Fan lasers provide one or more planes of light that are rotated about an axis, from which a difference in elevation can be derived. The common technique for deriving the difference in elevation is by determining the difference in time between detection of two or more fan beams. These systems, such as the Trimble Laser Station and Topcon Laser Zone systems provide accurate, up to millimeters differences in elevation. For excavators during a digging operation the critical accuracy is a vertical accuracy.

What is needed is to combine the radio-ranging systems with the laser-based systems to provide excavators with up to millimeters vertical accuracy.

Japanese Patent Application Publication No. JP 2006-194823 A describes a device for measuring the positions of working tools for working machines. One advantage of the device is that it can improve the accuracy of the height. More particularly, a 3D position of an excavator is determined by a GPS system installed on the excavator. Several detectors are used to calculate the position of a bucket, namely a boom angle detector, a stick angle detector, a bucket angle detector, and a tilt angle detector. A bucket position arithmetic means uses the data from the detectors to calculate the position of the bucket. Further, a laser emitting device is located at a reference position and generates a laser beam. The laser beam can be received by a detector attached to a stick of the excavator. A bucket height compensation means is used to correct the calculated position of the bucket using data from the laser detector.

International Patent Application Publication No. WO 2006/062769 A2 relates to a combination of laser systems and global navigation satellite systems configured to include self-surveying capabilities in addition to having tracking and machine control capabilities. In particular, a self-surveying laser transmitter is comprised of a laser transmitter configured to generate at least one rotating laser beam, a stationary radio positioning system receiver integrated with the laser transmitter, and a wireless communication device. The radio positioning system receiver obtains precise coordinate measurements of the laser transmitter by utilizing differential corrections transmitted from a Base Station by using the wireless communication device and a wireless communication link.

Further, U.S. Patent 5,404,661 is directed to an apparatus for determining the location of a work implement at a work site. The apparatus includes an undercarriage, a car body rotatably connected to the undercarriage, a boom connected to the car body, a stick connected to the boom, a work implement connected to the stick, a positioning system including a receiver connected to the stick and a processor for determining the location of the receiver in three dimensional space at a plurality of points as the car body is rotated and for determining the location and orientation of the work implement.

In U.S. Patent 6,782,644, a remote control system for a construction machine is disclosed. The system can easily perform remote setting of a target work plane and remote maneuvering of the construction machine in various work sites. In one example, a remote control terminal for wirelessly maneuvering a hydraulic excavator is provided in a management office so that entry of setting information of a target excavation plane and remote maneuvering can be performed from the side of the remote control terminal. A display unit for displaying a positional relationship between the hydraulic excavator and the target excavation plane is further provided in the remote control terminal. An operator can remotely set the target excavation plane while looking at the screen of the display unit, and also form the target excavation plane by remotely maneuvering a front working device using a joystick with the aid of a control function or an area limiting excavation controller. As a result, the remote setting of the target excavation plane and the remote maneuvering of the hydraulic excavator can be easily performed.

DISCLOSURE OF THE INVENTION

The invention is defined in claims 1 and 13, respectively. Particular embodiments are set out in the dependent claims.

In particular, the present invention provides systems and methods for 3-D integrated laser and radio positioning and guidance of an excavator. The excavator comprises: a frame comprising a cab member horizontally pivoted about a tread member, a boom pivotally mounted at a proximal end to the cab by a first pivot means, a stick pivotally mounted at a proximal end to a distal end of the boom by a second pivot means, and a bucket pivotally mounted at a proximal end to a distal end of the stick by a third pivot means. A distal end of the bucket defines a cutting edge which is used to excavate dirt in response to movement of the bucket towards the frame. The present invention is directed to an excavator 3D integrated laser and radio positioning guidance system (Ex_3D_ILRPGS) according to claim 1. In one embodiment, the excavator 3D integrated laser and radio positioning guidance system (Ex_3D_ILRPGS) of the present invention comprises: a mobile radio positioning system receiver configured to obtain 2D horizontal coordinates of the excavator; a bucket-to-machine-body positioning system configured to determine the position coordinates of the boom, the stick and the bucket of the excavator relative to the machine body; a laser detector configured to receive at least one laser beam and configured to provide a local vertical coordinate with a substantially high accuracy; and an on-board navigational system configured to receive and to integrate the 2D horizontal coordinates of the excavator obtained by the mobile radio positioning system receiver, the position coordinates of the boom, the stick and the bucket of the excavator obtained by the bucket-to-machine-body positioning system, and the local vertical coordinate obtained by the laser detector, and configured to guide the cutting edge of the bucket of the excavator with substantially high vertical accuracy.

In one embodiment of the present invention, the mobile radio positioning system receiver is selected from the group consisting of: {an autonomous satellite receiver; a Virtual Reference Station (VRS)-based differential satellite positioning system receiver; a Wide Area Augmentation Service (WAAS)-based differential satellite positioning system receiver; a Real Time Kinematic (RTK)-based satellite positioning system receiver; an Omni STAR-High Performance (HP) -based differential satellite positioning system receiver; and a pseudolite receiver}.

In one embodiment of the present invention, the satellite receiver is selected from the group consisting of: {a Global Positioning System (GPS) receiver; a GLONASS receiver, a Global Navigation Satellite System (GNSS) receiver; and a combined GPS-GLONASS receiver}.

In one embodiment of the present invention, the bucket-to-machine-body positioning system is selected from the group consisting of: {an angle (tilt) sensor; an in-cylinder measurement sensor; a potentiometer sensor; and a cable encoder}.

In one embodiment of the present invention, the laser detector further comprises: a single slope planar laser detector configured to receive a single slope plane laser beam from a single slope plane laser transmitter.

In another embodiment of the present invention, the laser detector further comprises: a dual slope planar laser detector configured to receive a dual slope plane laser beam from a dual slope plane laser transmitter.

In an additional embodiment of the present invention, the laser detector further comprises: a single sloping fan laser detector configured to receive a single sloping fan laser beam from a single sloping fan laser transmitter.

Yet, in one more embodiment of the present invention, the laser detector further comprises: a fan laser detector configured to receive at least two fan laser beams from a fan laser transmitter. In this embodiment of the present invention, the on-board navigational system is configured to compute the difference in height between the fan laser transmitter and the fan laser detector to increase the vertical accuracy of the Ex_3D_ILRPGS system.

In one embodiment of the present invention, the on-board navigational system further comprises: an on-board computer configured to calculate the difference between an actual position of the cutting edge of the bucket and a design surface, and configured to control the position of the cutting edge of the bucket by controlling hydraulics valves configured to operate the cutting edge of the bucket.

In one embodiment, the excavator 3D integrated laser and radio positioning guidance system (Ex_3D_ILRPGS) of the present invention further comprises: an on-board display system configured to display the movement of the bucket of the excavator, wherein a vertical coordinate of the cutting edge of the bucket is displayed with an accuracy substantially similar to a vertical accuracy of the laser beam.

In one embodiment, the excavator 3D integrated laser and radio positioning guidance system (Ex_3D_ILRPGS) of the present invention further comprises: a remotely located control station configured to remotely operate the excavator, and a communication link configured to link the remotely located control station and the on-board navigational system of the Ex_3D_ILRPGS system. In this embodiment of the present invention, the on-board navigational system is configured to transmit an excavator real time positioning data to the remotely located control station via the communication link, and the on-board navigational system is configured to receive at least one control signal from the remotely located control station via the communication link. The wireless communication link is selected from the group consisting of: {a cellular link; a radio; a private radio band; a SiteNet 900 private radio network; a wireless Internet; a satellite wireless communication link; and an optical wireless link}.

In this embodiment of the present invention, the remotely located control station further comprises: a display configured to display movements of the bucket of the remotely controlled excavator.

Another aspect of the present invention is directed to a method of operating an excavator with substantially high vertical accuracy by using an Ex_3D_ILRPGS system according to claim 13. In one embodiment, the method of the present invention comprises: (A) obtaining 2D horizontal coordinates of the excavator by using the mobile radio positioning system receiver; (B) determining the position coordinates of the boom, the stick and the bucket of the excavator relative to the machine body by using the bucket-to-machine-body positioning system; (C) obtaining a local vertical coordinate with a substantially high accuracy by using the laser detector configured to receive at least one laser beam from a laser transmitter; (D) receiving and integrating the 2D horizontal coordinates of the excavator obtained by the mobile radio positioning system receiver, the position coordinates of the boom, the stick and the bucket of the excavator obtained by the bucket-to-machine-body positioning system, and the local vertical coordinate obtained by the laser detector by using the on-board navigational system; and (E) guiding the cutting edge of the bucket of the excavator with substantially high vertical accuracy by using the on-board navigational system.

In one embodiment of the present invention, the step (A) further comprises: (A1) selecting the mobile radio positioning system receiver from the group consisting of: {an autonomous satellite receiver; a Virtual Reference Station (VRS)-based differential satellite positioning system receiver; a Wide Area Augmentation Service (WAAS)-based differential satellite positioning system; receiver a Real Time Kinematic (RTK)-based satellite positioning system receiver; an Omni STAR-High Performance (HP) -based differential satellite positioning system receiver; and a pseudolite receiver}. In this embodiment of the present invention, the step (A) further comprises: (A2) selecting the satellite receiver from the group consisting of: {a Global Positioning System (GPS) receiver; a GLONASS receiver, a Global Navigation Satellite System (GNSS) receiver; and a combined GPS-GLONASS receiver}.

In one embodiment of the present invention, wherein the mobile radio positioning system receiver further comprises a satellite receiver and a pseudolite receiver; the step (A) further comprises: obtaining a first horizontal coordinate of the excavator by using the satellite receiver, and obtaining a second horizontal coordinate of the excavator by using the pseudolite receiver.

In one embodiment of the present invention, the step (B) further comprises: (B1) selecting at least one position sensor from the group consisting of: {a tilt sensor; an in-cylinder measurement sensor; a potentiometer; and a cable encoder}.

In one embodiment of the present invention, the step (C) further comprises: (C1) receiving a single slope plane laser beam from a single slope plane laser transmitter by using a single slope planar laser detector. In another embodiment of the present invention, the step (C) further comprises: (C2) receiving a dual slope plane laser beam from a dual slope plane laser transmitter by using a dual slope planar laser detector. In one more embodiment of the present invention, the step (C) further comprises: (C3) receiving a single sloping fan laser beam from a single sloping fan laser transmitter by using a single sloping fan laser detector. Yet, in an additional embodiment of the present invention, the step (C) further comprises: (C4) receiving at least two fan laser beams from a fan laser transmitter by using a fan laser detector; wherein the on-board navigational system is configured to compute the difference in height between the fan laser transmitter and the fan laser detector to increase the vertical accuracy of the Ex_3D_ILRPGS system.

In one embodiment of the present invention, the step (D) further comprises: (D1) using an on-board computer to calculate the difference between an actual position of the cutting edge of the bucket and a design surface.

In one embodiment of the present invention, the step (E) further comprises: (E1) using the on-board navigational system to control the position of the cutting edge of the bucket by controlling hydraulics valves configured to operate the cutting edge of the bucket. In another embodiment of the present invention, the step (E) further comprises: (E2) using a remotely located control station to remotely operate the excavator. In one more embodiment of the present invention, the step (E) further comprises: (E3) using a communication link to connect the remotely located control station and the on-board navigational system of the Ex_3D_ILRPGS system; (E4) transmitting an excavator real time positioning data to the remotely located control station via the communication link; and (E5) receiving at least one control signal from the remotely located control station via the communication link. In this embodiment of the present invention, the step (E3) further comprises: (E3, 1) selecting the wireless communication link from the group consisting of: {a cellular link; a radio; a private radio band; a SiteNet 900 private radio network; a wireless Internet; a satellite wireless communication link; and an optical wireless link}.

In one embodiment, wherein the excavator further includes an on-board display system, the method of the present invention further comprises: (F) displaying the movement of the bucket of the excavator by using an on-board display system, wherein a vertical coordinate of a cutting edge of the bucket is displayed with accuracy substantially similar to a vertical accuracy of the laser beam.

In one embodiment, wherein the remotely located control station further includes a display system, the method of the present invention further comprises: (H) displaying the movement of the bucket of the excavator by using the control station display system, wherein a vertical coordinate of a cutting edge of the bucket is displayed with an accuracy substantially similar to a vertical accuracy of the laser beam.

One more aspect of the present invention is directed to a method of operating an excavator with improved vertical accuracy by using the Ex_3D_ILRPGS system, wherein 3D coordinates of the excavator are obtained by using a mobile radio positioning system receiver; and wherein a local vertical coordinate is obtained with a substantially high accuracy by using a laser detector configured to receive at least one laser beam from a laser transmitter.

In one embodiment, the method of the present invention comprises: (A) obtaining 3D coordinates of the excavator by using the mobile radio positioning system receiver; (B) determining the position coordinates of the boom, the stick and the bucket of the excavator relative to the machine body by using the bucket-to-machine-body positioning system; (C) obtaining a local vertical coordinate with a substantially high accuracy by using the laser detector configured to receive at least one laser beam from a laser transmitter; (D) receiving and integrating 3D coordinates of the excavator obtained by the mobile radio positioning system receiver, the position coordinates of the boom, the stick and the bucket of the excavator relative to the machine body obtained by the bucket-to-machine-body positioning system, and the local vertical coordinate obtained by the laser detector by using an on-board navigational system in order to improve vertical accuracy of the mobile radio positioning system receiver; and (E) guiding the cutting edge of the bucket of the excavator with improved vertical accuracy by using the on-board navigational system.

Yet, one more aspect of the present invention is directed to a method of operating an excavator with improved vertical accuracy by using the Ex_3D_ILRPGS system and by assigning weight functions to different measurements.

In one embodiment of the present invention, the method comprises: (A) obtaining a set of 3D coordinates measurements of the excavator by making a plurality measurements by using the mobile radio positioning system receiver; (B) obtaining position coordinates of the boom, the stick and the bucket of the excavator by utilizing the bucket-to-machine-body positioning system; (C) obtaining a set of local vertical coordinate measurements with a substantially high accuracy by making a plurality measurements by using the laser detector configured to receive at least one laser beam from a laser transmitter; (D) selecting a weight function configured to assign a 3D weight function to the set of 3D measurements obtained by using the mobile radio positioning system receiver, and configured to assign a vertical weight function to the set of local vertical coordinate measurements obtained by using the laser detector; (E) integrating the set of 3D coordinates measurements of the excavator with 3D weight function, and the set of the local vertical coordinate measurements with the vertical weight function by using the on-board navigational system in order to improve vertical accuracy of the mobile radio positioning system receiver; and (F) guiding the cutting edge of the bucket of the excavator with improved vertical accuracy by using the on-board navigational system.

BRIEF DESCRIPTION OF THE DRAWINGS

The accompanying drawings, which are incorporated in and form a part of this specification, illustrate embodiments of the invention and, together with the description, serve to explain the principles of the invention.

FIG. 1 depicts the excavator 3D integrated laser and radio positioning guidance system (Ex_3D_ILRPGS) that utilizes a plane laser transmitter for the purposes of the present invention.

FIG. 2 illustrates the excavator 3D integrated laser and radio positioning guidance system (Ex_3D_ILRPGS) that utilizes a fan laser transmitter for the purposes of the present invention.

BEST MODE FOR CARRYING OUT THE INVENTION

Reference now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific-details are set forth in order to provide a thorough understanding of the present invention. However, it will be obvious to one of ordinary skill in the art that the present invention may be practiced without these specific details. In other instances, well known methods, procedures, components, and circuits have not been described in detail as not to unnecessarily obscure aspects of the present invention.

Some portions of the detailed descriptions which follow are presented in terms of a mobile radio positioning system receiver, a laser-based positioning system, and an on-board navigational system. These descriptions and representations are the means used by those skilled in the navigational system arts to most effectively convey the substance of their work to others skilled in the art.

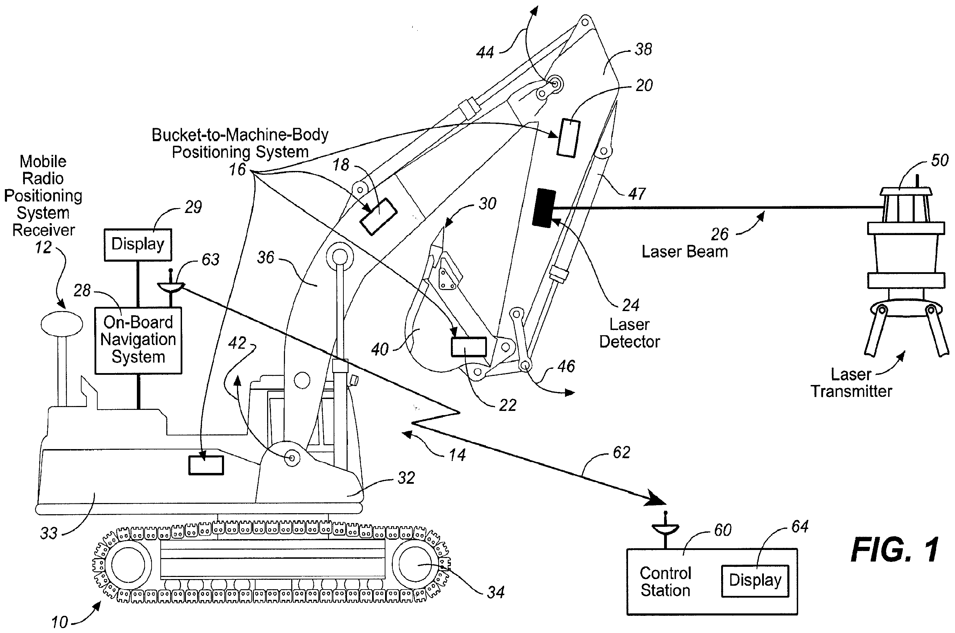

In one embodiment of the present invention, FIG. 1 illustrates an excavator 3D integrated laser and radio positioning guidance system (Ex_3D_ILRPGS) 10. A typical excavator 14 (of FIG. 1) comprises: a frame 33 comprising a cab member 32 horizontally pivoted about a tread member 34, a boom 36 pivotally mounted at a proximal end to the cab 32 by a first pivot means 42, a stick 38 pivotally mounted at a proximal end to a distal end of the boom 36 by a second pivot means 44, and a bucket 40 pivotally mounted at a proximal end to a distal end of the stick 38 by a third pivot means 46. A distal end of the bucket 40 defines a cutting edge 30 which is used to excavate dirt in response to movement of the bucket 40 towards the frame 33.

In one embodiment of the present invention, the excavator 3D integrated laser and radio positioning guidance system (Ex_3D_ILRPGS) 10 further comprises: the mobile radio positioning system receiver 12 configured to obtain 2D horizontal coordinates of the excavator 14, and the bucket-to-machine-body positioning system 16 configured to determine the position of the bucket cutting edge 30 relative to the machine body 33.

Referring still to FIG. 1, in one embodiment of the present invention, the excavator 3D integrated laser and radio positioning guidance system (Ex_3D_ILRPGS) 10 further comprises: a laser detector 24 configured to receive at least one laser beam 26 and configured to provide a local vertical coordinate with a substantially high accuracy, and an on-board navigational system 28 configured to receive and to integrate the 2D horizontal coordinates of the excavator obtained by the mobile radio positioning system receiver 12, the coordinates of the boom 36, the stick 38 and the bucket 40 of the excavator 14 obtained by the bucket-to-machine-body positioning system 16, and the local vertical coordinate obtained by the laser detector 24, and configured to guide the cutting edge of the bucket 30 of the excavator 14 with substantially high vertical accuracy.

In one embodiment of the present invention, the satellite receiver (not shown) is selected from the group consisting of: {a Global Positioning System (GPS) receiver; a GLONASS receiver, a Global Navigation Satellite System (GNSS) receiver; and a combined GPS-GLONASS receiver}.

The Global Positioning System (GPS) is a system of satellite signal transmitters that transmits information from which an observer's present location and/or the time of observation can be determined. The GPS system is fully described in the document ICD-GPS-200: GPS Interface Control Document, ARINC Research, 1997, GPS Joint Program Office.

Another satellite-based navigation system is called the Global Orbiting Navigational System (GLONASS), which can operate as an alternative or supplemental system. The GLONASS system was placed in orbit by the former Soviet Union and now maintained by the Russian Republic.

As disclosed in the European Commission "White Paper on European transport policy for 2010", the European Union will develop an independent satellite navigation system GALILEO as a part of a global navigation satellite infrastructure (GNSS).

Reference to a radio positioning system (RADPS) herein refers to a Global Positioning System (GPS), to a Global Orbiting Navigation System (GLONASS), to GALILEO System, and to any other compatible Global Navigational Satellite System (GNSS) satellite-based system that provides information by which an observer's position and the time of observation can be determined, all of which meet the requirements of the present invention, and to a ground based radio positioning system such as a system comprising of one or more pseudolite transmitters.

After the RADPS receiver determines the coordinates of i-th satellite by demodulating the transmitted ephemeris parameters, the RADPS receiver can obtain the solution of the set of the simultaneous equations for its unknown coordinates $(x_0, y_0, z_0)$ and for unknown time bias error (cb). The RADPS receiver can also determine velocity of a moving platform.

Referring still to FIG. 1, in one embodiment of the present invention, the mobile radio positioning system receiver 12 is selected from the group consisting of: {an autonomous satellite receiver; a Virtual Reference Station (VRS)-based differential satellite positioning system receiver; a Wide Area Augmentation Service (WAAS)-based differential satellite positioning system receiver; a Real Time Kinematic (RTK)-based satellite positioning system receiver; an Omni STAR-High Performance (HP) -based differential satellite positioning system receiver; and a pseudolite receiver}.

In one embodiment, the mobile radio positioning system receiver 12 (of FIG. 1) comprises a differential GPS receiver. In differential position determination, many of the errors in the RADPS signals that compromise the accuracy of absolute position determination are similar in magnitude for stations that are physically close. The effect of these errors on the accuracy of differential position determination is therefore substantially reduced by a process of partial error cancellation. Thus, the differential positioning method is far more accurate than the absolute positioning method, provided that the distances between these stations are substantially less than the distances from these stations to the satellites, which is the usual case. Differential positioning can be used to provide location coordinates and distances that are accurate to within a few centimeters in absolute terms. The differential GPS receiver can include: (a) a real time code differential GPS; (b) a post-processing differential GPS; (c) a real-time kinematic (RTK) differential GPS that includes a code and carrier RTK differential GPS receiver.

The differential GPS receiver can obtain the differential corrections from different sources. Referring still to FIG. 1, in one embodiment of the present invention, the differential GPS receiver 12 can obtain the differential corrections from a Base Station (not shown).

The fixed Base Station (BS) placed at a known location determines the range and range-rate measurement errors in each received GPS signal and communicates these measurement errors as corrections to be applied by local users. The Base Station (BS) has its own imprecise clock with the clock bias$CB_{BASE}$. As a result, the local users are able to obtain more accurate navigation results relative to the Base Station location and the Base Station clock. With proper equipment, a relative accuracy of 5 meters should be possible at distances of a few hundred kilometers from the Base Station.

Referring still to FIG. 1, in one embodiment of the present invention, the mobile radio positioning system receiver 12 can be implemented by using a TRIMBLE Ag GPS -132 receiver that obtains the differential corrections from the U. S. Cost Guard service free in 300 kHz band broadcast by using the wireless communication device (not shown) and the wireless communication link (not shown). In this embodiment, the mobile radio positioning system receiver 12 should be placed within (2-300) miles from the U. S. Cost Guard Base Station. The accuracy of this differential GPS method is about 50 cm.

Referring still to FIG. 1, in one embodiment of the present invention, the differential corrections can be obtained from the Wide Area Augmentation System (WAAS). The WAAS system includes a network of Base Stations that uses satellites (initially geostationary satellites-GEOs) to broadcast GPS integrity and correction data to GPS users. The WAAS provides a ranging signal that augments the GPS, which is the WAAS ranging signal is designed to minimize the standard GPS receiver hardware modifications. The WAAS ranging signal utilizes the GPS frequency and GPS-type of modulation, including only a Coarse/Acquisition (C/A) PRN code. In addition, the code phase timing is synchronized to GPS time to provide a ranging capability. To obtain the position solution, the WAAS satellite can be used as any other GPS satellite in satellite selection algorithm. The WAAS provides the differential corrections free of charge to a WAAS-compatible user. The accuracy of this method is better than 1 meter.

Referring still to FIG. 1, in one embodiment of the present invention, the mobile radio positioning system receiver 12 comprising a real time kinematic (RTK) differential GPS receiver can be used to obtain the position locations with less than 2 cm accuracy. RTK is a process where GPS signal corrections are transmitted in real time from a reference receiver at a known location to one or more remote rover receivers. The use of an RTK capable GPS system can compensate for atmospheric delay, orbital errors and other variables in GPS geometry, increasing positioning accuracy up to within a centimeter. Used by engineers, topographers, surveyors and other professionals, RTK is a technique employed in applications where precision is paramount. RTK is used, not only as a precision positioning instrument, but also as a core for navigation systems or automatic machine guidance, in applications such as civil engineering and dredging. It provides advantages over other traditional positioning and tracking methods, increasing productivity and accuracy. Using the code phase of GPS signals, as well as the carrier phase, which delivers the most accurate GPS information, RTK provides differential corrections to produce the most precise GPS positioning. The RTK process begins with a preliminary ambiguity resolution. This is a crucial aspect of any kinematic system, particularly in real-time where the velocity of a rover receiver should not degrade either the achievable performance or the system's overall reliability. Please, see U. S. Patent No. 5,602,741.

Referring still to FIG. 1, in one embodiment of the present invention, the mobile radio positioning system receiver 12 comprising a differential GPS receiver can obtain the differential corrections from the Virtual Base Station (VBS) (not shown)by using the wireless communication device (not shown) and the wireless communication link (not shown).

Indeed, the Virtual Base Station (VBS) is configured to deliver a network-created correction data to a multiplicity of rovers via a concatenated communications link consisting of a single cellular connection, and a radio transmission or broadcasting system. The location of the radio transmitting system can be co-located with a GPS Base Station designated as the position of the local Virtual Reference Station. This GPS Base Station determines its position using GPS, and transmits its location to the VRS Base Station via a cellular link between the local GPS Base Station and the VRS Base Station. It enables the VRS Base Station to generate differential corrections as if such differential corrections were actually being generated at the real GPS Base Station location. An article "Long-Range RTK Positioning Using Virtual Reference Stations," by Ulrich Vollath, Alois Deking, Herbert Landau, and Christian Pagels, describing VRS in more details, and can be accessed at the following URL: http://tr1.trimble.com/dscgi/ds.py/Get/File-93152/KIS2001-Paper-LongRange.pdf.

Referring still to FIG. 1, in one embodiment of the present invention, the mobile radio positioning system receiver 12 can be implemented by using the Trimble® AgGPS® EZ-Guide® 252 system that combines the EZ-Guide Plus light bar guidance system with the AgGPS 252 multi-function receiver. The EZ-Guide 252 light bar guidance system would enable an excavator operator to choose the required level of GPS accuracy to manually steer an excavator. To achieve better than 5,08 cm (2 inch) accuracy one can use the Omni STAR High Performance (HP) satellite services.

The Omni STAR-HP (High Performance) solution is a dual frequency GPS augmentation service that provides robust and reliable high performance GPS positioning. By using dual frequency GPS observations, Omni STAR-HP can measure the true ionospheric error at the reference station and user location, substantially eliminating this effect in positioning accuracy. Using these iono-free measurements with other information contained in the GPS receiver carrier phase data, the OmniSTAR-HP solution is able to create a wide area positioning solution of unmatched accuracy and performance in selected areas. Published accuracies are 0.2 meter horizontal (Hz) and 0.3 meter vertical (Z).

Referring still to FIG. 1, in one embodiment of the present invention, the mobile radio positioning system receiver 12 can be implemented by using a pseudolite. The pseudolite comprises a ground based radio positioning system working in any radio frequency including but not limited to the GPS frequencies and the ISM (industrial scientific medical) unlicensed operation band, including 900 MHZ, 2.4 GHz, or 5.8 GHz bands ISM bands, or in a radio location band such as the (9.5-10) GHz band. Pseudolites can be used for enhancing the GPS by providing increased accuracy, integrity, and availability. The complete description of the pseudolite transmitters in GPS band can be found in 'Global Positioning System: Theory and Applications; Volume II", edited by Bradford W. Parkinson and James J. Spilker Jr., and published in Volume 164 in "PROGRESS IN ASTRONAUTICS AND AERONAUTICS", by American Institute of Aeronautic and Astronautics, Inc., in 1966. For the purposes of the present invention, the pseudolite manufactured by Locata (Canberra, Australia) and Novariant (Menlo Park, California) can be used.

Referring still to FIG. 1, in one embodiment of the present invention, the mobile radio positioning system receiver 12 mobile radio positioning system can be implemented by using a combination of a satellite receiver (not shown) configured to receive the satellite signals from a plurality of visible satellites, and a pseudolite receiver (not shown) configured to receive the pseudolite signals from a plurality of available pseudolites in order to obtain the position coordinates of the excavator 14. Pseudolites as radio positioning systems can be configured to operate in ISM band. Thus, in this embodiment, the user can own both ends of the ISM communication system, including 900 MHZ, 2.4 GHz, or 5.8 GHz bands. The ISM technologies are manufactured by Trimble Navigation Limited, Sunnyvale, Calif. Metricom, Los Gatos, Calif. and by Utilicom, Santa Barbara, Calif.

The following discussion is focused on a GPS receiver, though the same approach can be used for a GLONASS receiver, for a GPS/GLONASS combined receiver, GALILEO receiver, or any other RADPS receiver.

Referring still to FIG. 1, in one embodiment of the present invention, the bucket-to-machine-body positioning system 16 is configured to determine the position of the bucket cutting edge 30 relative to the machine body 33. This can be done using a plurality of different methods.

In one embodiment of the present invention, the bucket-to-machine-body positioning system 16 is configured to determine the position of the bucket cutting edge 30 relative to the machine body 33 by using the tilt (angle) sensor 18 attached to the boom 36, the tilt (angle) sensor 20 attached to the stick 38, and the tilt (angle) sensor 22 attached to the bucket 40.

A tilt sensor manufactured by SignalQuest, Inc., located in Lebanon, NH, 03766, USA, can be used for the purposes of the present invention. SignalQuest, Inc. manufactures embedded micro-sensors. For instance, the SQ-SEN-001P series sensors produce continuous on-off contact closures when in motion. When at rest, it will either settle in an open or closed state. It is sensitive to both tilt (static acceleration) and vibration (dynamic acceleration). The sensor can be easily used to produce a series of CMOS or TTL level logic pulses using a single resistor to limit current. This signal can be used to interrupt (wake up) a microcontroller or can be counted to estimate the amount and duration of activity. The sensor is fully passive, requires no signal conditioning, and can be easily used in a microcontroller interrupt circuit that draws 0.25uA of continuous current. Another sensor manufactured by SignalQuest, Inc. is the SQ-SI-360DA Solid-State MEMS Inclinometer. SQ-SI-360DA Solid-State MEMS Inclinometer provides both an analog voltage output and digital serial output corresponding directly to a full-scale range of $360\text{c}$ of pitch angle or $\pm 80\text{c}$ of pitch and roll angle.

In one embodiment of the present invention, the bucket-to-machine-body positioning system 16 is configured to determine the position of the bucket cutting edge 30 relative to the machine body 33 by using cable encoders (not shown) that measure the extension of the hydraulic rams. Trimble Navigation LTD manufactures CE21 that uses cable encoders.

A cable encoder for the purposes of the present invention can be implemented by using an optical incremental encoder. Optical incremental encoder is a linear/angular position sensor that uses light and optics to sense motion. Optical encoders can provide position information at high speeds. Most rotary optical encoders consist of a glass disk with equally spaced markings, a light source mounted on one side of the disk, and a photo detector mounted on the other side. The components of rotary optical encoders are typically packaged in a rugged enclosed housing protecting the light path and electronics from dust and other materials frequently present in hostile industrial environments. When the disk rotates, the markings on the disk temporarily obscure the passage of light causing the encoder to output a pulse. The number of pulses generated by the encoder per revolution dictates the resolution of the encoder. The resolution of encoders (their PPR, pulses per revolution), typically ranges from a few PPR to as high as a few hundred thousand PPR. Because the markings on the disk are uniformly distributed, encoders always generate a pulse in response to a known incremental move in position. Subsequently, the position of an object can be measured by connecting the output of an encoder to a counter that increments or decrements every time the encoder generates a pulse. The value of the counter indicates the position of the object quantized to the resolution of the encoder. That is, if an encoder generates 10 pulses per revolution, the resolution of the position measurement can be no better than 1/10th of a revolution.

To detect the direction of motion and increase the effective resolution of the encoder, a second photo detector is added and a mask is inserted between the glass disk and the photo detectors (not illustrated). The two photo detectors and the mask are arranged so that two sine waves (which are out of phase by 90°) are generated as the encoder shaft is rotated. These quadrature signals as they are called are either sent out of the encoder directly as analog sine wave signals or squared using comparators to produce digital outputs. To increase the resolution of the encoder, a method called interpolation is applied to either or both the sine wave or square wave outputs. Interpolation typically results in an increased encoder resolution of 2 to 25 times the fundamental resolution of the glass disk. Direction is derived by simply looking at the timing of the quadrature signals from the encoder.

A variation on the standard rotary encoder is the hollow shaft encoder. Hollow shaft encoders are self contained encoders without a shaft. Instead of coupling to a shaft to measure position, hollow shaft encoders simply mount over the shaft to be measured. Subsequently, hollow shaft encoders eliminate the resonance associated with couplings and simplify the difficulties of alignment. Linear optical encoders sense linear motion. Linear encoders replace the rotating disk with a stationary scale marked at equally spaced intervals. The scale of a linear encoder can be constructed from glass, metal or tape (metal, plastic...). The markings on the scale are read with a moving head assembly that contains the light source and photo detectors. The resolution of a linear encoder is specified in units of distance and is dictated by the distance between markings. Linear encoders are available in lengths from several centimeters to hundreds of meters and resolutions as low as a micron (or less).

The laser optical encoder is another type of motion sensor. Although these devices use a different measurement approach internally, they offer the same functionality as standard encoders. Of the variety of motion sensors available, encoders provide the best accuracy and speed for a reasonable price and are readily available from numerous manufacturers.

In one embodiment of the present invention, the bucket-to-machine-body positioning system 16 is configured to determine the position of the bucket cutting edge 30 relative to the machine body 33 by using the position sensing cylinders (in-cylinder measurement) where the length of the cylinder is determined by using methods like time of flight or other methods to measure the distance from one end of the cylinder to the other.

In one embodiment of the present invention, the bucket-to-machine-body positioning system 16 is configured to determine the position of the bucket cutting edge 30 relative to the machine body 33 by using a potentiometer which is a type of bridge circuit for measuring voltages. The original potentiometers are divided into four main classes: the constant resistance potentiometer, the constant current potentiometer, the microvolt potentiometer and the thermocouple potentiometer.

There are also systems in development that use a mix, for example a potentiometer on the boom, a tilt sensor on the stick (with integrated laser detector) and a position sensing cylinder on the bucket. Manufacturers of "bucket to machine body" sub systems include Mikrofyn, Prolec, Axiomatic and Trimble.

Referring still to FIG. 1, in one embodiment of the present invention, the laser detector 24 further comprises: a single slope planar laser detector configured to receive a single slope plane laser beam 26 from a single slope plane laser transmitter 50. A similar single slope plane laser transmitter product such as the GL700 is manufactured by Trimble.

More specifically, according to the US Patent No. 6,433,866, the laser transmitter 50 (of FIG. 1) includes a rotating laser system (not shown). In a rotating laser system a laser source spins (mechanically, or optically) in the horizontal plane (or Z-plane). The rotating laser emits a laser beam that provides an accurate reference plane with millimeter accuracy. However, to detect and get benefit of the rotating laser beam, the potential user has to be located within vertical range, and be equipped with laser detector (or laser receiver) capable of receiving the rotating laser beam. In the mechanical embodiment, the motor physically rotates the laser and accordingly the laser beam. In the optical embodiment, the mirror rotates in such a way that the physically non-rotating laser emits the rotating laser beam.

In another embodiment of the present invention, referring still to FIG. 1, the laser detector 24 further comprises: a dual slope planar laser detector configured to receive a dual slope plane laser beam (not shown) from a dual slope plane laser transmitter 50.

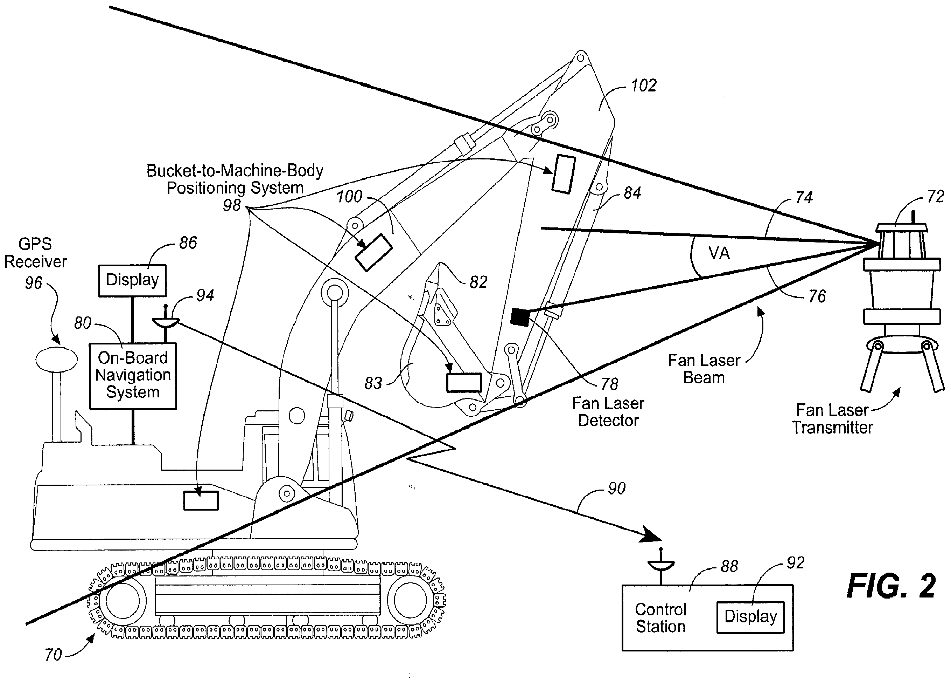

In one embodiment of the present invention, FIG. 2 illustrates excavator 3D integrated laser and radio positioning guidance system (Ex_3D_ILRPGS) 70 that utilizes a fan laser transmitter 72. In this embodiment of the present invention, the laser detector 78 further comprises a single sloping fan laser detector configured to receive a single sloping fan laser beam 76 (or 74) from the single sloping fan laser transmitter 72. The detailed description of such fan laser transmitter 72 is given in the copending published US patent application US-2006-0012777 entitled "COMBINATION LASER SYSTEM AND GLOBAL NAVIGATION SATELLITE SYSTEM".

The copending US patent application US-2006-0012777 is assigned to the assignee of the present patent application.

Referring still to FIG. 2, in one embodiment of the present invention, the laser detector 78 further comprises a fan laser detector configured to receive at least two fan laser beams (74 and 76) from the fan laser transmitter 72. In this embodiment of the present invention, the on-board navigational system 28 is configured to compute the difference in height between the fan laser transmitter 72 and the fan laser detector 78 to increase the vertical accuracy of the Ex_3D_ILRPGS system. Trimble Navigation Ltd. manufactures 3D Laser Station 72 that generates two rotating fan-shaped laser beams 74 and 76 (of FIG. 2).

In one embodiment of the present invention, the on-board navigational system (28 of FIG. 1, or 80 of FIG. 2) further comprises an on-board computer (not shown) configured to calculate the difference between an actual position of the cutting edge of the bucket (30 of FIG. 1, or 82 of FIG. 2) and a design surface (not shown), and configured to control the position of the cutting edge of the bucket by controlling hydraulics valves (47 of FIG. 1 or 84 of FIG. 2) configured to operate the cutting edge of bucket (30 of FIG. 1, or 82 of FIG. 2).

In one embodiment, the excavator 3D integrated laser and radio positioning guidance system (Ex_3D_ILRPGS) of the present invention further comprises: an on-board display system (29 of FIG. 1, or 86 of FIG. 2) configured to display the movement of the bucket (40 of FIG. 1, or 83 of FIG. 2) of the excavator. A vertical coordinate of the cutting edge of the bucket (30 of FIG. 1, or 82 of FIG. 2) is displayed with accuracy substantially similar to a vertical accuracy of the laser beam (26 of FIG. 1, or 74, 76 of FIG. 2).

In one embodiment, the excavator 3D integrated laser and radio positioning guidance system (Ex_3D_ILRPGS) of the present invention further comprises: a remotely located control station (60 of FIG. 1, or 88 of FIG. 2) configured to remotely operate the excavator, and a communication link (62 of FIG. 1, or 90 of FIG. 2) configured to link the remotely located control station and the on-board navigational system of the Ex_3D_ILRPGS system. In this embodiment of the present invention, the on-board navigational system is configured to transmit an excavator real time positioning data to the remotely located control station via the communication link, and the on-board navigational system is configured to receive at least one control signal from the remotely located control station via the communication link. The wireless communication link (62 of FIG. 1, or 90 of FIG. 2) is selected from the group consisting of: {a cellular link; a radio; a private radio band; a SiteNet 900 private radio network; a wireless Internet; a satellite wireless communication link; and an optical wireless link}.

In one embodiment of the present invention, referring still to FIG. 1, the remotely located control station 60 further comprises a display 64 configured to display movements of the bucket 40 of the remotely controlled excavator. Similarly, as shown in FIG. 2, the remotely located control station 88 further comprises a display 92 configured to display movements of the bucket 83 of the remotely controlled excavator.

In one embodiment of the present invention, the wireless communication link (62 of FIG. 1, or 90 of FIG. 2) can be implemented by using the Trimble SiteNet™ 900 private radio network. The Trimble SiteNet™ 900 private radio network is a rugged, multi-network, 900 MHz radio modem designed specifically for the construction and mining industries. It is used to establish robust, wireless data broadcast networks for real-time, high-precision GPS applications. This versatile Trimble radio operates in the frequency range of 902-928 MHz, broadcasting, repeating, and receiving real-time data used by Trimble GPS receivers. Under optimal conditions, the SiteNet 900 radio broadcasts data up to 10 km (6.2 miles) line-of-sight and coverage can be enhanced by using a network of multi-repeaters. Using the SiteNet 900 radio as a repeater, enables one to provide coverage in previously inaccessible or obstructed locations. The SiteNet 900 radio is so versatile, that one can easily change its operating mode to suit any network configuration. This reduces costs and maximizes uptime. Additionally, SiteNet 900 is license free in the U.S.A. and Canada, which makes it extremely portable. One can move it from project to project without licensing hassles and restrictions. The SiteNet 900 radio is designed to operate reliably in demanding RF environments where many other products and technologies cannot. Optimized for GPS with increased sensitivity and jamming immunity, the SiteNet 900 radio also has error correction, and a high-speed data rate, ensuring maximum performance. The SiteNet 900 radio is especially suited for use with Trimble's SiteVision™ GPS grade control system, and is ideal for all GPS machine control applications where reliability is important. The machine-rugged unit has been designed and built especially for harsh construction and mining environments. Fully sealed against dust, rain, splash, and spray, the SiteNet 900 radio remains reliable in all weather. The radio's ruggedness and reliability minimizes downtime, lowering ownership costs. Trimble's SiteNet 900 radio can be used with any Trimble GPS receiver, including: MS750, MS850, MS860, and 5700 receivers.

In one embodiment of the present invention, the wireless communication link (62 of FIG. 1, or 90 of FIG. 2) can be implemented by using a 1.8 GHz band that supports the personal communications services (PCS). The PCS uses the international standard DCS-1800. Yet, in one more embodiment, the wireless communication link can include a real time circuit switched wireless communication link. For instance, the wireless communication link employing a real time circuit switched wireless communication link can include the Iridium satellite system produced by Motorola, Schaumburg, Ill.

In one additional embodiment, the wireless communication link (62 of FIG. 1, or 90 of FIG. 2) can be implemented by using a system of Low Earth Orbiting Satellites (LEOS), a system of Medium Earth Orbiting Satellites (MEOS), or a system of Geostationary Earth Orbiting Satellites (GEOS) which can be used to store and to forward digital packet data. For instance, the LEOS systems in (20-30) GHz range are manufactured by Cellular Communications located in Redmond, Washington, and the LEOS systems in (1.6-2.5) GHz range are produced by Loral/Qualcomm located in San Diego, California.

The wireless communication link (62 of FIG. 1, or 90 of FIG. 2) for the purposes of the present invention can be implemented by using a cellular telephone communication means, a paging signal receiving means, wireless messaging services, wireless application services, a wireless WAN/LAN station, or an Earth-satellite-Earth communication module that uses at least one satellite to relay a radio wave signal. The wireless communication link can also include the cellular telephone communication means that can include an Advanced Mobile Phone System (AMPS) with a modem. The modem can comprise a DSP (digital signal processor) modem in 800 MHZ range, or a cellular digital packet data (CDPD) modem in 800 MHZ range. The cellular digital communication means includes a means of modulation of digital data over a radio link using a time division multiple access (TDMA) system employing format IS-54, a code division multiple access (CDMA) system employing format IS-95, or a frequency division multiple access (FDMA). The TDMA system used in Europe is called groupe special mobile (GSM) in French.

In one embodiment of the present invention, a cellular telephone communication means can be used to get a wireless access to the Internet in order, for example, to broadcast the real time coordinates of the self-surveying laser transmitter position on a special web-site.

The wireless communication device (63 of FIG. 1, or 94 of FIG. 2) for the purposes of the present invention can be implemented by using any of devices that can be configured to provide: {a cellular link; a radio link; a private radio band link; a SiteNet 900 private radio network link; a link to the wireless Internet; and a satellite wireless communication link}. A person skillful in the art can easily identify all these devices. Please, see the discussion above.

In one embodiment of the present invention, the wireless communication device (63 of FIG. 1, or 94 of FIG. 2) is configured to respond to specific requests from a mobile equipment (not shown) transmitted over the wireless communication link (62 of FIG. 1, or 90 of FIG. 2).

Another aspect of the present invention is directed to a method of operating an excavator with substantially high vertical accuracy. The method of the present invention can be performed by using the excavator 3D integrated laser and radio positioning guidance system (Ex_3D_ILRPGS) 10 of FIG. 1 that is configured to receive a laser bean from the plane laser 50, or by using the excavator 3D integrated laser and radio positioning guidance system (Ex_3D_ILRPGS) 70 of FIG. 2 that is configured to receive receives at least one fan laser bean from the fan laser 72.

In one embodiment, the method of the present invention comprises (not shown): (A) obtaining 2D horizontal coordinates of the excavator by using the mobile radio positioning system receiver (12 of FIG. 1, or 96 of FIG. 2); (B) obtaining position coordinates of the boom, the stick and the bucket of the excavator by utilizing the bucket-to-machine-body positioning system (16 of FIG. 1, or 98 of FIG. 2); (C) obtaining a local vertical coordinate with a substantially high accuracy by using the laser detector (24 of FIG. 1, or 78 of FIG. 2) configured to receive at least one laser beam from the laser transmitter (50 of FIG. 1, or 72 of FIG. 2); (D) receiving and integrating the 2D horizontal coordinates of the excavator obtained by the mobile radio positioning system receiver, the position coordinates of the boom, the stick and the bucket of the excavator obtained by the bucket-to-machine-body positioning system, and the local vertical coordinate obtained by the laser detector by using the on-board navigational system(28 of FIG. 1, or 80 of FIG. 2); and (E) guiding the cutting edge (30 of FIG. 1, or 82 of FIG. 2) of the bucket of the excavator with substantially high vertical accuracy by using the on-board navigational system (28 of FIG. 1, or 80 of FIG. 2).

In one embodiment of the present invention, the step (A) further comprises (not shown, please see discussion above): (A1) selecting the mobile radio positioning system receiver (12 of FIG. 1, or 96 of FIG. 2) from the group consisting of: {an autonomous satellite receiver; a Virtual Reference Station (VRS)-based differential satellite positioning system receiver; a Wide Area Augmentation Service (WAAS)-based differential satellite positioning system receiver; a Real Time Kinematic (RTK)-based satellite positioning system receiver; an Omni STAR-High Performance (HP) -based differential satellite positioning system receiver; and a pseudolite receiver}. In this embodiment of the present invention, the step (A) further comprises (not shown, please see discussion above): (A2) selecting the satellite receiver (12 of FIG. 1, or 96 of FIG. 2) from the group consisting of: {a Global Positioning System (GPS) receiver; a GLONASS receiver, a Global Navigation Satellite System (GNSS) receiver; and a combined GPS-GLONASS receiver}.

In one embodiment of the present invention, wherein the mobile radio positioning system receiver (12 of FIG. 1, or 96 of FIG. 2) further comprises a satellite receiver and a pseudolite receiver; the step (A) further comprises: obtaining a first horizontal coordinate of the excavator by using the satellite receiver, and obtaining a second horizontal coordinate of the excavator by using the pseudolite receiver.

In one embodiment of the present invention, the step (B) further comprises: (B1) selecting the bucket-to-machine-body positioning system (16 of FIG. 1, or 98 of FIG. 2) from the group consisting of: {a tilt sensor; an in-cylinder measurement sensor; and a cable encoder}. Please, see discussion above.

In one embodiment of the present invention, more specifically, the step (C) of obtaining the local vertical coordinate with substantially high accuracy further comprises: (C1) receiving the single slope plane laser beam (26 of FIG. 1) from the single slope plane laser transmitter (50 of FIG. 1) by using the single slope planar laser detector (24 of FIG. 1).

In one embodiment of the present invention, more specifically, the step (C) of obtaining the local vertical coordinate with substantially high accuracy further comprises: (C2) receiving the dual slope plane laser beam (not shown) from the dual slope plane laser transmitter (50 of FIG. 1) by using the dual slope planar laser detector (24 of FIG. 1).

In one embodiment of the present invention, more specifically, the step (C) of obtaining the local vertical coordinate with substantially high accuracy further comprises: (C3) receiving the single sloping fan laser beam (76 of FIG. 2) from the single sloping fan laser transmitter (72 of FIG. 2) by using the single sloping fan laser detector (78 of FIG. 2).

In one embodiment of the present invention, more specifically, the step (C) of obtaining the local vertical coordinate with substantially high accuracy further comprises: (C4) receiving at least two fan laser beams (74 and 76 of FIG. 2) from the fan laser transmitter (72 of FIG. 2) by using the fan laser detector (78 of FIG. 2), wherein the on-board navigational system (80 of FIG. 2) is configured to compute the difference in height between the fan laser transmitter (72 of FIG. 2) and the fan laser detector (78 of FIG. 2) to increase the vertical accuracy of the Ex_3D_ILRPGS system.

In one embodiment of the present invention, the step (D) of receiving and integrating the 2D horizontal coordinates of the excavator obtained by the mobile radio positioning system receiver, the position coordinates of the boom, the stick and the bucket of the excavator obtained by the bucket-to-machine-body positioning system, and the local vertical coordinate obtained by the laser detector further comprises: (D1) using the on-board computer (not shown) to calculate the difference between an actual position of the cutting edge of the bucket (30 of FIG. 1, or 82 of FIG. 2) and a design surface (not shown).

In one embodiment of the present invention, the step (E) of guiding the cutting edge of the bucket of the excavator with substantially high vertical accuracy further comprises: (E1) using the on-board navigational system (28 of FIG. 1, or 80 of FIG. 2) to control the position of the cutting edge of the bucket by controlling hydraulics valves configured to operate the cutting edge of the bucket (30 of FIG. 1, or 82 of FIG. 2).

In one embodiment of the present invention, the step (E) of guiding the cutting edge (30 of FIG. 1, or 82 of FIG. 2) of the bucket of the excavator with substantially high vertical accuracy further comprises: (E2) using the remotely located control station (60 of FIG. 1, or 88 of FIG. 2) to remotely operate the excavator. In this embodiment of the present invention, the step (E) further comprises: (E3) using the communication link (62 of FIG. 1, or 90 of FIG. 2) to link the remotely located control station (60 of FIG. 1, or 88 of FIG. 2) and the on-board navigational system (28 of FIG. 1, or 80 of FIG. 2) of the Ex_3D_ILRPGS system; (E4) transmitting an excavator real time positioning data to the remotely located control station via the communication link; and (E5) receiving at least one control signal from the remotely located control station via the communication link. In this embodiment of the present invention, the step (E3) further comprises: (E3, 1) selecting the wireless communication link from the group consisting of: {a cellular link; a radio; a private radio band; a SiteNet 900 private radio network; a wireless Internet; a satellite wireless communication link; and an optical wireless link}. Please, see the discussion above.

In one embodiment, wherein the excavator further includes the on-board display system (29 of FIG. 1, or 86 of FIG. 2), the method of the present invention comprises: (F) displaying the movement of the cutting edge of the bucket (30 of FIG. 1, or 82 of FIG. 2) by using the on-board display system (29 of FIG. 1, or 86 of FIG. 2), wherein a vertical coordinate of the cutting edge of the bucket is displayed with an accuracy substantially similar to a vertical accuracy of the laser beam.

In one embodiment, wherein the remotely located control station (60 of FIG. 1, or 88 of FIG. 2) further includes the display system (64 of FIG. 1, or 92 of FIG. 2), the method of the present invention comprises: (H) displaying the movement of the bucket of the excavator by using the control station display system, wherein a vertical coordinate of the cutting edge of the bucket is displayed with an accuracy substantially similar to a vertical accuracy of the laser beam.

One more aspect of the present invention is directed to a method of operating an excavator with improved vertical accuracy by using the Ex_3D_ILRPGS system, wherein 3D coordinates of the excavator are obtained by using a mobile radio positioning system receiver; and wherein a local vertical coordinate is obtained with a substantially high accuracy by using a laser detector configured to receive at least one laser beam from a laser transmitter.

In one embodiment of the present invention, the method comprises (not shown): (A) obtaining 3D coordinates of the excavator by using the mobile radio positioning system receiver; (B) obtaining position coordinates of the boom, the stick and the bucket of the excavator by utilizing the bucket-to-machine-body positioning system; (C) obtaining a local vertical coordinate with a substantially high accuracy by using the laser detector configured to receive at least one laser beam from a laser transmitter; (D) receiving and integrating the 3D coordinates of the excavator obtained by the mobile radio positioning system receiver, the coordinates of the boom, the stick and the bucket of the excavator obtained by the bucket-to-machine-body positioning system, and the local vertical coordinate obtained by the laser detector by using an on-board navigational system in order to improve vertical accuracy of the mobile radio positioning system receiver; and (E) guiding the cutting edge of the bucket of the excavator with improved vertical accuracy by using the on-board navigational system.

Yet, one more aspect of the present invention is directed to a method of operating an excavator with improved vertical accuracy by using the Ex_3D_ILRPGS system and by assigning weight functions to different measurements.

A weight function is a mathematical device used when performing a sum, integral, or average in order to give some elements more of a "weight" than others. They occur frequently in statistics and analysis, and are closely related to the concept of a measure. Weight functions can be constructed in both discrete and continuous settings.

In the discrete setting, a weight function $w : A \rightarrow \mathbb{R}^+$ is a positive function defined on a discrete set A, which is typically finite or countable. The weight function w(a): = 1 corresponds to the unweighted situation in which all elements have equal weight. One can then apply this weight to various concepts. If

$$f : A \rightarrow \mathbb{R}$$

is a real-valued function, then the unweighted sum of f on A is

$$\sum_{a \in A} f(a) \quad ;$$

but for a weight function

$$w : A \rightarrow \mathbb{R}^+,$$

the weighted sum is

$$\sum_{a \in A} f(a)w(a) \quad .$$

One common application of weighted sums arises in numerical integration. If B is a finite subset of A, one can replace the unweighted cardinality |B| of B by the weighted cardinality

$$\sum_{a \in B} w(a).$$

If A is a finite non-empty set, one can replace the unweighted mean or average

$$\frac{1}{|A|} \sum_{a \in A} f(a)$$

by the weighted mean or weighted average

$$\frac{\sum_{a \in A} f(a)w(a)}{\sum_{a \in A} w(a)} .$$

In this case only the relative weights are relevant. Weighted means are commonly used in statistics to compensate for the presence of bias.

The terminology weight function arises from mechanics: if one has a collection of n objects on a lever, with weights

$$w_1,...,w_n$$

(where weight is now interpreted in the physical sense) and locations

$$x_1,...,x_n,$$

then the lever will be in balance if the fulcrum of the lever is at the center of mass

$$\frac{\sum_{i=1}^{n} w_i x_i}{\sum_{i=1}^{n} w_i} ,$$

which is also the weighted average of the positions xi.

In one embodiment, the method of the present invention comprises: (A) obtaining a set of 3D coordinates measurements of the excavator by making a plurality measurements by using the mobile radio positioning system receiver; (B) obtaining position coordinates of the boom, the stick and the bucket of the excavator by utilizing the bucket-to-machine-body positioning system; (C) obtaining a set of local vertical coordinate measurements with a substantially high accuracy by making a plurality measurements by using the laser detector configured to receive at least one laser beam from a laser transmitter; (D) selecting a weight function configured to assign a 3D weight function to a set of 3D measurements obtained by using the mobile radio positioning system receiver, and configured to assign a vertical weight function to a set of local vertical coordinate measurements obtained by using the laser detector; (E) integrating the set of 3D coordinates measurements of the excavator with the 3D weight function, and the set of the local vertical coordinate measurements with the vertical weight function by using the on-board navigational system in order to improve vertical accuracy of the mobile radio positioning system receiver; and (F) guiding the cutting edge of the bucket of the excavator with improved vertical accuracy by using the on-board navigational system.

EXAMPLES.

1) Benching on a point of known height and then catching the beam to get a known height on the beam for both flat surface and sloping surfaces.
2) Stopping in the beam and averaging a number of GPS positions with reference to the beam to get an elevation on the beam (or elevation and orientation on a sloping beam) .

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the claims appended hereto.

**Claims**

1.  An excavator 3D integrated laser and radio positioning guidance system (10, 70), Ex_3D_ILRPGS, for a excavator (14); wherein said excavator (14) further comprises: a frame (33) comprising a cab member (32) horizontally pivoted about a tread member (34), a boom (36, 100) pivotally mounted at a proximal end to said cab member (32) by a first pivot means (42), a stick (38) pivotally mounted at a proximal end to a distal end of said boom (36, 100) by a second pivot means (44), and a bucket (40, 83) pivotally mounted at a proximal end to a distal end of said stick (38, 102) by a third pivot means (46); wherein a distal end of said bucket (40, 83) defines a cutting edge (30, 82) which is used to excavate dirt in response to movement of said bucket (40, 83) towards said frame (33); said Ex_3D_ILRPGS (10, 70) comprising:

    a mobile radio positioning system receiver (12, 96) configured to obtain a set of 3D coordinates measurements of said excavator (14) by making a plurality of measurements;
    a bucket-to-machine-body positioning system (16, 18, 98) configured to obtain position coordinates of said boom (36, 100), said stick (38, 102) and said bucket (40, 83) of said excavator (14);
    a laser detector (24, 78) configured to receive at least one laser beam (26, 74, 76) and configured to provide a set of local vertical coordinate measurements with a substantially high accuracy by making a plurality of measurements; and
    an on-board navigational system (28, 80) configured to:

        select a weight function configured to assign a 3D weight function to said set of 3D coordinates measurements obtained by said mobile radio positioning system receiver (12, 96) and to assign a vertical weight function to said set of local vertical coordinate measurements obtained by said laser detector (24, 78);
        integrate said set of 3D coordinates measurements of said excavator (14) with said 3D weight function, said position coordinates of said boom (36, 100), said stick (38, 102) and said bucket (40, 83) of said excavator (14) obtained by said bucket-to-machine-body positioning system (16, 18, 98), and said set of local vertical coordinate measurements with the vertical weight function; and
        guide said cutting edge (30, 82) of said bucket (40, 83) of said excavator (14) with substantially high vertical accuracy.

2.  The system of claim 1, wherein said mobile radio positioning system receiver (12, 96) is selected from the group consisting of: {an autonomous satellite receiver; a Virtual Reference Station (VRS)-based differential satellite positioning system receiver; a Wide Area Augmentation Service (WAAS)-based differential satellite positioning system receiver; a Real Time Kinematic (RTK)-based satellite positioning system receiver; an Omni STAR-High Performance (HP)-based differential satellite positioning system receiver; and a pseudolite receiver}; and wherein said satellite receiver is selected from the group consisting of: {a Global Positioning System (GPS) receiver; a GLONASS receiver, a Global Navigation Satellite System (GNSS) receiver; and a combined GPS-GLONASS receiver}.

3.  The system of claim 1 or 2, wherein said bucket-to-machine-body positioning system (16, 18, 98) is selected from the group consisting of: {a tilt sensor (18); an in-cylinder measurement sensor; a potentiometer; and a cable encoder}.

4.  The system of claim 1, 2 or 3, wherein said laser detector (24, 78) further comprises:

    a single slope planar laser detector (24) configured

to receive a single flat plane laser beam (26) from a single flat plane laser transmitter (50) or

to receive a single sloping plane laser beam (26) from a single sloping plane laser transmitter (50).

5. The system of claim 1, 2 or 3, wherein said laser detector (24, 78) further comprises:

a dual slope planar laser detector (24) configured to receive a dual slope plane laser beam (26) from a dual slope plane laser transmitter (50).

6. The system of claim 1, 2 or 3, wherein said laser detector (24, 78) further comprises:

a single sloping fan laser detector (78) configured to receive a single sloping fan laser beam (76) from a single sloping fan laser transmitter (72); and

wherein said on-board navigational system (28, 80) is configured to compute the difference in height between said fan laser transmitter (72) and said fan laser detector (78) to increase the vertical accuracy of said Ex_3D_ILRPGS (10, 70).

7. The system of claim 1, 2 or 3, wherein said laser detector (24, 78) further comprises:

a fan laser detector (78) configured to receive at least two fan laser beams (74, 76) from a fan laser transmitter (72); and

wherein said on-board navigational system (28, 80) is configured to compute the difference in height between said fan laser transmitter (72) and said fan laser detector (78) to increase the vertical accuracy of said Ex_3D_ILRPGS (10, 70).

8. The system of any of the preceding claims further comprising:

an on-board display system (29, 86) configured to display the movement of said bucket (40, 83) of said excavator (14);

wherein a vertical coordinate of said cutting edge (30, 82) of said bucket (40, 83) is displayed with accuracy substantially similar to a vertical accuracy of said laser beam (26, 74, 76).

9. The system of claim 8, wherein said on-board navigational system (28, 80) further comprises:

an on-board computer configured to calculate the difference between an actual position of said cutting edge (30, 82) of said bucket (40, 83) and a design surface, and wherein said on-board display system (29, 86) is configured to display said actual position of said cutting edge (30, 82) of said bucket (40, 83) relative to said design surface.

10. The system of any of the preceding claims, wherein said on-board navigational system (28, 80) further comprises:

an on-board computer configured to calculate the difference between an actual position of said cutting edge (30, 82) of said bucket (40, 83) and a design surface, and configured to control said position of said cutting edge (30, 82) of said bucket (40, 83) by controlling hydraulics valves (47, 84) configured to operate said cutting edge (30, 82) of said bucket (40, 83).

11. The system of any of the preceding claims further comprising:

a remotely located control station (60, 88) configured to remotely operate said excavator (14); and

a communication link (62, 90) configured to link said remotely located control station (60, 88) and said on-board navigational system (28, 80) of said Ex_3D_ILRPGS (10, 70);

wherein said on-board navigational system (28, 80) is configured to transmit an excavator real time positioning data to said remotely located control station (60, 88) via said communication link (62, 90), and wherein said on-board navigational system (28, 80) is configured to receive at least one control signal from said remotely located control station (60, 88) via said communication link (62, 90); and

wherein said wireless communication link (62, 90) is selected from the group consisting of: {a cellular link; a radio; a private radio band; a SiteNet 900 private radio network; a wireless Internet; a satellite wireless communication link; and an optical wireless link}.

12. The system of claim 11, wherein said remotely located control station (60, 88) further comprises:

a display (64, 92) configured to display said remotely controlled excavator (14).

13. A method of operating an excavator (14) with improved vertical accuracy by using an excavator 3D integrated laser and radio positioning guidance system (10, 70), Ex_3D_ILRPGS, and by assigning weight functions to different measurements; wherein said excavator (14) further comprises: a frame (33) comprising a cab member (32) horizontally pivoted about a tread member (34), a boom (36, 100) pivotally mounted at a proximal end to said cab member (32) by a first pivot means (42), a stick (38, 102) pivotally mounted at a proximal end to a distal end of said boom (36, 100) by a second pivot means (44), and a bucket (40, 83) pivotally mounted at a proximal end to a distal end of said stick (38, 102) by a third pivot means (46); wherein a distal end of said bucket (40, 83) defines a cutting edge (30, 82) which is used to excavate dirt in response to movement of said bucket (40, 83) towards said frame (33); said Ex_3D_ILRPGS (10, 70) comprising: a mobile radio positioning system receiver (12, 96), a bucket-to-machine-body positioning system (16, 18, 98), a laser detector (24, 78), and an on-board navigational system (28, 80); said method comprising:

(A) obtaining a set of 3D coordinates measurements of said excavator (14) by making a plurality of measurements by using said mobile radio positioning system receiver (12, 96);

(B) obtaining position coordinates of said boom (36, 100), said stick (38, 102) and said bucket (40, 83) of said excavator (14) by utilizing said bucket-to-machine-body positioning system (16, 18, 98);

(C) obtaining a set of local vertical coordinate measurements with a substantially high accuracy by making a plurality of measurements by using said laser detector (24, 78) configured to receive at least one laser beam (26, 74, 76) from a laser transmitter (50, 72);

(D) selecting a weight function configured to assign a 3D weight function to said set of 3D coordinates measurements obtained by using said mobile radio positioning system receiver (12, 96), and configured to assign a vertical weight function to said set of local vertical coordinate measurements obtained by using said laser detector (24, 78);

(E) integrating said set of 3D coordinates measurements of said excavator (14) with said 3D weight function, and said set of the local vertical coordinate measurements with said vertical weight function by using said onboard navigational system (28, 80) in order to improve vertical accuracy of said mobile radio positioning system receiver (12, 96); and

(F) guiding said cutting edge (30, 82) of said bucket (40, 83) of said excavator (14) with improved vertical accuracy by using said on-board navigational system (28, 80).

**14.** The method of claim 13, wherein said mobile radio positioning system receiver (12, 96) further comprises a satellite receiver and a pseudolite receiver; wherein said satellite receiver is configured to obtain at least one coordinate of said excavator (14); and wherein said pseudolite receiver is configured to obtain at least one coordinate of said excavator (14); and

wherein said step (A) of obtaining a set of 3D coordinates measurements of said excavator (14) by using said mobile radio positioning system receiver (12, 96) further comprises:

(A1) selecting said mobile radio positioning system receiver (12, 96) from the group consisting of: {an autonomous satellite receiver; a Virtual Reference Station (VRS)-based differential satellite positioning system receiver; a Wide Area Augmentation Service (WAAS)-based differential satellite positioning system receiver; a Real Time Kinematic (RTK)-based satellite positioning system receiver; and an Omni STAR-High Performance (HP) -based differential satellite positioning system receiver}; and
(A2) selecting said satellite receiver from the group consisting of: {a Global Positioning System (GPS) receiver; a GLONASS receiver, a Global Navigation Satellite System (GNSS) receiver; and a combined GPS- GLONASS receiver}.

**Patentansprüche**

**1.** In einen Bagger integriertes 3D-Laser und Funkpositionsbestimmungs-Führungssystem (10, 70), Ex_D_ILRPGS, für einen Bagger (14); wobei der Bagger (14) ferner umfasst: einen Rahmen (33) mit einem Kabinenelement (32), der horizontal um ein Laufflächenelement (34) geschwenkt wird, einen Ausleger (36, 100), der an einem proximalen Ende an dem Kabinenelement (32) durch ein erstes Schwenkmittel (42) schwenkbar montiert ist, eine Stange (38), die an einem proximalen Ende an einem distalen Ende des Auslegers (36, 100) durch ein zweites Schwenkmittel (44) schwenkbar montiert ist, und eine Schaufel (40, 83), die an einem proximalen Ende an einem distalen Ende der Stange (38, 102) durch ein drittes Schwenkmittel (46) schwenkbar montiert ist; wobei ein distales Ende der Schaufel (40, 83) eine Schneidkante (30, 82) definiert, die verwendet wird, um in Reaktion auf eine Bewegung der Schaufel (40, 83) in Richtung des Rahmens (33) Erde auszubaggern; wobei das Ex_3D_ILRPGS (10, 70) umfasst:

einen Mobilfunk-Positionsbestimmungssystemempfänger (12, 96), der dazu ausgelegt ist, einen Satz von 3D-Koordinatenmessungen des Baggers (14) durch Durchführen einer Vielzahl von Messungen zu erhalten;

ein Schaufel-zu-Maschinenkarosserie-Positionsbestimmungssystem (16, 18, 98), das dazu ausgelegt ist, Positionskoordinaten des Auslegers (36, 100), der Stange (38, 102) und der Schaufel (40, 83) des Baggers (14) zu erhalten;

einen Laserdetektor (24, 78), der dazu ausgelegt ist, mindestens einen Laserstrahl (26, 74, 76) zu empfangen, und dazu ausgelegt ist, einen Satz von lokalen Messungen von vertikalen Koordinaten mit einer im Wesentlichen hohen Genauigkeit durch Durchführen einer Vielzahl von Messungen bereitzustellen; und

ein Bordnavigationssystem (28, 80), das dazu ausgelegt ist:

eine Gewichtungsfunktion auszuwählen, die dazu ausgelegt ist, eine 3D-Gewichtungsfunktion dem Satz von 3D-Koordinatenmessungen zuzuweisen, die durch den Mobilfunk-Positionsbestimmungssystemempfänger (12, 96) erhalten werden, und eine vertikale Gewichtungsfunktion dem Satz von lokalen Messungen von vertikalen Koordinaten zuzuweisen, die durch den Laserdetektor (24, 78) erhalten werden;

den Satz von 3D-Koordinatenmessungen des Baggers (14) mit der 3D-Gewichtungsfunktion, die Positionskoordinaten des Auslegers (36, 100), der Stange (38, 102) und der Schaufel (40, 83) des Baggers (14), die durch das Schaufel-zu-Maschinenkarosserie-Positionsbestimmungssystem (16, 18, 98) erhalten werden, und den Satz von lokalen Messungen von vertikalen Koordinaten mit der vertikalen Gewichtungsfunktion zu integrieren; und

die Schneidkante (30, 82) der Schaufel (40, 83) des Baggers (14) mit einer im Wesentlichen hohen vertikalen Genauigkeit zu führen.

2. System nach Anspruch 1, wobei der Mobilfunk-Positionsbestimmungssystememempfänger (12, 96) aus der Gruppe ausgewählt ist, die besteht aus: {einem autonomen Satellitenempfänger; einem differentiellen Satelliten-Positionsbestimmungssystememempfänger auf der Basis einer virtuellen Referenzstation (VRS); einem differentiellen Satelliten-Positionsbestimmungssystememempfänger auf der Basis eines überregionalen Erweiterungsdienstes (WAAS); einem Satelliten-Positionsbestimmungssystememempfänger auf der Basis von Echtzeitkinematik (RTK); einem differentiellen Satelliten-Positionsbestimmungssystememempfänger auf der Basis von Omni STAR-Hochleistung (HP); und einem Pseudolit-Empfänger}; und

wobei der Satellitenempfänger aus der Gruppe ausgewählt ist, die besteht aus: {einem Empfänger eines globalen Positionsbestimmungssystems (GPS); einem GLONASS-Empfänger, einem Empfänger eines globalen Navigationssatellitensystems (GNSS); und einem kombinierten GPS-GLONASS-Empfänger}.

3. System nach Anspruch 1 oder 2, wobei das Schaufel-zu-Maschinenkarosserie-Positionsbestimmungssystem (16, 18, 98) aus der Gruppe ausgewählt ist, die besteht aus: {einem Neigungssensor (18); einem Messsensor im Zylinder; einem Potentiometer; und einem Kabelcodierer}.

4. System nach Anspruch 1, 2 oder 3, wobei der Laserdetektor (24, 78) ferner umfasst:

einen planaren Einzelneigungs-Laserdetektor (24), der dazu ausgelegt ist

einen Einzelflachebenen-Laserstrahl (26) von einem Einzelflachebenen-Lasersender (50) zu empfangen, oder einen Einzelneigungsebenen-Laserstrahl (26) von einem Einzelneigungsebenen-Lasersender (50) zu empfangen.

5. System nach Anspruch 1, 2 oder 3, wobei der Laserdetektor (24, 78) ferner umfasst:

einen planaren Doppelneigungs-Laserdetektor (24), der dazu ausgelegt ist, einen Doppelneigungsebenen-Laserstrahl (26) von einem Doppelneigungsebenen-Lasersender (50) zu empfangen.

6. System nach Anspruch 1, 2 oder 3, wobei der Laserdetektor (24, 78) ferner umfasst:

einen Einzelneigungs-Fächerlaserdetektor (78), der dazu ausgelegt ist, einen Einzelneigungs-Fächerlaserstrahl (76) von einem Einzelneigungs-Fächerlasersender (72) zu empfangen; und wobei das Bordnavigationssystem (28, 80) dazu ausgelegt ist, die Differenz der Höhe zwischen dem Fächerlasersender (72) und dem Fächerlaserdetektor (78) zu berechnen, um die vertikale Genauigkeit des Ex_3D_ILRPGS (10, 70) zu erhöhen.

7. System nach Anspruch 1, 2 oder 3, wobei der Laserdetektor (24, 78) ferner umfasst:

einen Fächerlaserdetektor (78), der dazu ausgelegt ist, mindestens zwei Fächerlaserstrahlen (74, 76) von einem Fächerlasersender (72) zu empfangen; und

wobei das Bordnavigationssystem (28, 80) dazu ausgelegt ist, die Differenz der Höhe zwischen dem Fächerlasersender (72) und dem Fächerlaserdetektor (78) zu berechnen, um die vertikale Genauigkeit des Ex_3D_ILRPGS (10, 70) zu erhöhen.

8. System nach einem der vorangehenden Ansprüche, das ferner umfasst:

   ein Bordanzeigesystem (29, 86), das dazu ausgelegt ist, die Bewegung der Schaufel (40, 83) des Baggers (14) anzuzeigen;
   wobei eine vertikale Koordinate der Schneidkante (30, 82) der Schaufel (40, 83) mit einer Genauigkeit angezeigt wird, die im Wesentlichen ähnlich zu einer vertikalen Genauigkeit des Laserstrahls (26, 74, 76) ist.

9. System nach Anspruch 8, wobei das Bordnavigationssystem (28, 80) ferner umfasst:

   einen Bordcomputer, der dazu ausgelegt ist, die Differenz zwischen einer tatsächlichen Position der Schneidkante (30, 82) der Schaufel (40, 83) und einer Entwurfsoberfläche zu berechnen, und wobei das Bordanzeigesystem (29, 86) dazu ausgelegt ist, die tatsächliche Position der Schneidkante (30, 82) der Schaufel (40, 83) relativ zur Entwurfsoberfläche anzuzeigen.

10. System nach einem der vorangehenden Ansprüche, wobei das Bordnavigationssystem (28, 80) ferner umfasst:

   einen Bordcomputer, der dazu ausgelegt ist, die Differenz zwischen einer tatsächlichen Position der Schneidkante (30, 82) der Schaufel (40, 83) und einer Entwurfsoberfläche zu berechnen, und dazu ausgelegt ist, die Position der Schneidkante (30, 82) der Schaufel (40, 83) durch Steuern von Hydraulikventilen (47, 84) zu steuern, die dazu ausgelegt sind, die Schneidkante (30, 82) der Schaufel (40, 83) zu betätigen.

11. System nach einem der vorangehenden Ansprüche, das ferner umfasst:

   eine entfernt angeordnete Steuerstation (60, 88), die dazu ausgelegt ist, den Bagger (14) fernzusteuern; und
   eine Kommunikationsverbindung (62, 90), die dazu ausgelegt ist, die entfernt angeordnete Steuerstation (60, 88) und das Bordnavigationssystem (28, 80) des Ex_3D_ILRPGS (10, 70) zu verbinden;
   wobei das Bordnavigationssystem (28, 80) dazu ausgelegt ist, Bagger-Echtzeit-Positionsbestimmungsdaten zur entfernt angeordneten Steuerstation (60, 88) über die Kommunikationsverbindung (62, 90) zu übertragen, und wobei das Bordnavigationssystem (28, 80) dazu ausgelegt ist, mindestens ein Steuersignal von der entfernt angeordneten Steuerstation (60, 88) über die Kommunikationsverbindung (62, 90) zu empfangen; und
wobei die drahtlose Kommunikationsverbindung (62, 90) aus der Gruppe ausgewählt ist, die besteht aus: {einer zellularen Verbindung; einem Funk; einem privaten Funkband; einem privaten SiteNet 900 Funknetz; einem drahtlosen Internet; einer drahtlosen Satelliten-Kommunikationsverbindung; und einer optischen drahtlosen Verbindung}.

12. System nach Anspruch 11, wobei die entfernt angeordnete Steuerstation (60, 88) ferner umfasst:

   eine Anzeige (64, 92), die dazu ausgelegt ist, den ferngesteuerten Bagger (14) anzuzeigen.

13. Verfahren zum Betreiben eines Baggers (14) mit verbesserter vertikaler Genauigkeit unter Verwendung eines in einen Bagger integrierten 3D-Laser und Funkpositionsbestimmungs-Führungssystems (10, 70), Ex_3D_ILRPGS, und durch Zuweisen von Gewichtungsfunktionen zu verschiedenen Messungen; wobei der Bagger (14) ferner umfasst: einen Rahmen (33) mit einem Kabinenelement (32), der horizontal um ein Laufflächenelement (34) geschwenkt wird, einen Ausleger (36, 100), der an einem proximalen Ende an dem Kabinenelement (32) durch ein erstes Schwenkmittel (42) schwenkbar montiert ist, eine Stange (38, 102), die an einem proximalen Ende an einem distalen Ende des Auslegers (36, 100) durch ein zweites Schwenkmittel (44) schwenkbar montiert ist, und eine Schaufel (40, 83), die an einem proximalen Ende an einem distalen Ende der Stange (38, 102) durch ein drittes Schwenkmittel (46) schwenkbar montiert ist; wobei ein distales Ende der Schaufel (40, 83) eine Schneidkante (30, 82) definiert, die verwendet wird, um in Reaktion auf eine Bewegung der Schaufel (40, 83) in Richtung des Rahmens (33) Erde auszubaggern; wobei das Ex_3D_ILRPGS (10, 70) umfasst: einen Mobilfunk-Positionsbestimmungssystemempfänger (12, 96), ein Schaufel-zu-Maschinenkarosserie-Positionsbestimmungssystem (16, 18, 98), einen Laserdetektor (24, 78) und ein Bordnavigationssystem (28, 80); wobei das Verfahren umfasst:

   (A) Erhalten eines Satzes von 3D-Koordinatenmessungen des Baggers (14) durch Durchführen einer Vielzahl von Messungen unter Verwendung des Mobilfunk-Positionsbestimmungssystemempfängers (12, 96);

(B) Erhalten von Positionskoordinaten des Auslegers (36, 100), der Stange (38, 102) und der Schaufel (40, 83) des Baggers (14) unter Verwendung des Schaufel-zu-Maschinenkarosserie-Positionsbestimmungssystems (16, 18, 98);

(C) Erhalten eines Satzes von lokalen Messungen von vertikalen Koordinaten mit einer im Wesentlichen hohen Genauigkeit durch Durchführen einer Vielzahl von Messungen unter Verwendung des Laserdetektors (24, 78), der dazu ausgelegt ist, mindestens einen Laserstrahl (26, 74, 76) von einem Lasersender (50, 72) zu empfangen;

(D) Auswählen einer Gewichtungsfunktion, die dazu ausgelegt ist, eine 3D-Gewichtungsfunktion dem Satz von 3D-Koordinatenmessungen zuzuweisen, die unter Verwendung des Mobilfunk-Positionsbestimmungssystemempfängers (12, 96) erhalten werden, und dazu ausgelegt ist, eine vertikale Gewichtungsfunktion dem Satz von lokalen Messungen von vertikalen Koordinaten zuzuweisen, die unter Verwendung des Laserdetektors (24, 78) erhalten werden;

(E) Integrieren des Satzes von 3D-Koordinatenmessungen des Baggers (14) mit der 3D-Gewichtungsfunktion und des Satzes von lokalen Messungen von vertikalen Koordinaten mit der vertikalen Gewichtungsfunktion unter Verwendung des Bordnavigationssystems (28, 80), um die vertikale Genauigkeit des Mobilfunk-Positionsbestimmungssystemempfängers (12, 96) zu verbessern; und

(F) Führen der Schneidkante (30, 82) der Schaufel (40, 83) des Baggers (14) mit verbesserter vertikaler Genauigkeit unter Verwendung des Bordnavigationssystems (28, 80).

14. Verfahren nach Anspruch 13, wobei der Mobilfunk-Positionsbestimmungssystemempfänger (12, 96) ferner einen Satellitenempfänger und einen Pseudolit-Empfänger umfasst;

wobei der Satellitenempfänger dazu ausgelegt ist, mindestens eine Koordinate des Baggers (14) zu erhalten; und wobei der Pseudolit-Empfänger dazu ausgelegt ist, mindestens eine Koordinate des Baggers (14) zu erhalten; und

wobei der Schritt (A) zum Erhalten eines Satzes von 3D-Koordinatenmessungen des Baggers (14) unter Verwendung des Mobilfunk-Positionsbestimmungssystemempfängers (12, 96) ferner umfasst:

(A1) Auswählen des Mobilfunk-Positionsbestimmungssystemempfängers (12, 96) aus der Gruppe, die besteht aus: {einem autonomen Satellitenempfänger; einem differentiellen Satelliten-Positionsbestimmungssystemempfänger auf der Basis einer virtuellen Referenzstation (VRS); einem differentiellen Satelliten-Positionsbestimmungssystemempfänger auf der Basis eines überregionalen Erweiterungsdienstes (WAAS); einem Satelliten-Positionsbestimmungssystemempfänger auf der Basis von Echtzeitkinematik (RTK); und einem differentiellen Satelliten-Positionsbestimmungssystemempfänger auf der Basis von Omni STAR-Hochleistung (HP)}; und

(A2) Auswählen des Satellitenempfängers aus der Gruppe, die besteht aus: {einem Empfänger eines globalen Positionsbestimmungssystems (GPS); einem GLONASS-Empfänger, einem Empfänger eines globalen Navigationssatellitensystems (GNSS); und einem kombinierten GPS-GLONASS-Empfänger}.

## Revendications

1. Système de guidage, par positionnement laser et radio (10, 70) intégré dans une excavatrice, Ex_3D_ILRPGS, pour une excavatrice (14) ; dans lequel ladite excavatrice (14) comprend en outre : un châssis (33) comprenant un élément formant cabine (32) pivotant horizontalement autour d'un élément de roulement (34), une flèche (36, 100) montée pivotante à une extrémité proximale sur ledit élément formant cabine (32) par un premier moyen de pivotement (42), une flèche secondaire (38) montée pivotante à une extrémité proximale sur une extrémité distale de ladite flèche (36, 100) par un deuxième moyen de pivotement (44), et un godet (40, 83) monté pivotant à une extrémité proximale sur une extrémité distale de ladite flèche secondaire (38, 102) par un troisième moyen de pivotement (46) ; dans lequel une extrémité distale dudit godet (40, 83) définit un bord d'attaque (30, 82) qui est utilisé pour excaver des déblais en réponse au mouvement dudit godet (40, 83) vers ledit châssis (33) ; ledit Ex_3D_ILRPGS (10, 70) comprenant :

un récepteur de système de positionnement radio mobile (12, 96) configuré pour obtenir un ensemble de mesures de coordonnées 3D de ladite excavatrice (14) en faisant une pluralité de mesures ;
un système de positionnement godet - corps de machine (16, 18, 98) configuré pour obtenir des coordonnées de position de ladite flèche (36, 100), de ladite flèche secondaire (38, 102) et dudit godet (40, 83) de ladite excavatrice (14) ;
un détecteur laser (24, 78) configuré pour recevoir au moins un faisceau laser (26, 74, 76) et configuré pour fournir un ensemble de mesures de coordonnées verticales locales avec une précision sensiblement élevée en faisant une pluralité de mesures ; et

un système de navigation embarqué (28, 80) configuré pour :

sélectionner une fonction de pondération configurée pour attribuer une fonction de pondération 3D audit ensemble de mesures de coordonnées 3D obtenu par ledit récepteur de système de positionnement radio mobile (12, 96) et pour attribuer une fonction de pondération verticale audit ensemble de mesures de coordonnées verticales locales obtenu par ledit détecteur laser (24, 78) ; intégrer ledit ensemble de mesures de coordonnées 3D de ladite excavatrice (14) avec ladite fonction de pondération 3D, lesdites coordonnées de position de ladite flèche (36, 100), de ladite flèche secondaire (38, 102) et dudit godet (40, 83) de ladite excavatrice (14) obtenues par ledit système de positionnement godet - corps de machine (16, 18, 98), et ledit ensemble de mesures de coordonnées verticales locales avec ladite fonction de pondération verticale ; et guider ledit bord d'attaque (30, 82) dudit godet (40, 83) de ladite excavatrice (14) avec une précision verticale sensiblement élevée.

2. Système selon la revendication 1, dans lequel ledit récepteur de système de positionnement radio mobile (12, 96) est choisi dans le groupe constitué par : un récepteur satellites autonome ; un récepteur de système de positionnement par satellites différentiel basé sur une station virtuelle de référence (Virtual Reference Station, VRS) ; un récepteur de système de positionnement par satellites différentiel basé sur un service de renforcement à couverture étendue (Wide Area Augmentation Service, WAAS) ; un récepteur de système de positionnement par satellites en temps réel (Real Time Kinematic, RTK) ; un récepteur de système de positionnement par satellites différentiel Omni STAR-High Performance (HP) ; et un récepteur pseudolites ; et dans lequel ledit récepteur satellites est choisi dans le groupe constitué par : un récepteur de système de positionnement global (GPS) ; un récepteur GLONASS ; un récepteur GNSS (Global Navigation Satellite System) ; et un récepteur combiné GPS-GLONASS.

3. Système selon la revendication 1 ou 2, dans lequel ledit système de positionnement godet - corps de machine (16, 18, 98) est choisi dans le groupe constitué par : un capteur d'inclinaison (18) ; un capteur de mesure intégré dans un vérin ; un potentiomètre ; et un codeur câble.

4. Système selon la revendication 1, 2 ou 3, dans lequel ledit détecteur laser (24, 78) comprend en outre :

un détecteur laser planaire à simple pente (24) configuré

pour recevoir un faisceau laser plan et plat simple (26) d'un émetteur laser plan et plat simple (50) ou
pour recevoir un faisceau laser plan à simple pente (26) d'un émetteur laser plan à simple pente (50).

5. Système selon la revendication 1, 2 ou 3, dans lequel ledit détecteur laser (24, 78) comprend en outre :

un détecteur laser planaire à double pente (24) configuré pour recevoir un faisceau laser plan à double pente (26) d'un émetteur laser plan à double pente (50).

6. Système selon la revendication 1, 2 ou 3, dans lequel ledit détecteur laser (24, 78) comprend en outre:

un détecteur laser en éventail à simple pente (78) configuré pour recevoir un faisceau laser en éventail à simple pente (76) d'un émetteur laser en éventail à simple pente (72) ; et dans lequel ledit système de navigation embarqué (28, 80) est configuré pour calculer la différence de hauteur entre ledit émetteur laser en éventail (72) et ledit détecteur laser en éventail (78) pour augmenter la précision verticale dudit Ex_3D_ILRPGS (10, 70).

7. Système selon la revendication 1, 2 ou 3, dans lequel ledit détecteur laser (24, 78) comprend en outre :

un détecteur laser en éventail (78) configuré pour recevoir au moins deux faisceaux laser en éventail (74, 76) d'un émetteur laser en éventail (72) ; et dans lequel ledit système de navigation embarqué (28, 80) est configuré pour calculer la différence de hauteur entre ledit émetteur laser en éventail (72) et ledit détecteur laser en éventail (78) pour augmenter la précision verticale dudit Ex_3D_ILRPGS (10, 70).

8. Système selon l'une quelconque des revendications précédentes, comprenant en outre :

un système d'affichage embarqué (29, 86) configuré pour afficher le mouvement dudit godet (40, 83) de ladite excavatrice (14) ; dans lequel une coordonnée verticale dudit bord d'attaque (30, 82) dudit godet (40, 83) est affichée avec une précision sensiblement similaire à une précision verticale dudit faisceau laser (26, 74, 76).

9. Système selon la revendication 8, dans lequel ledit système de navigation embarqué (28, 80) comprend en outre :

> un ordinateur de bord configuré pour calculer la différence entre une position réelle dudit bord d'attaque (30, 82) dudit godet (40, 83) et une surface nominale, et dans lequel ledit système d'affichage embarqué (29, 86) est configuré pour afficher ladite position réelle dudit bord d'attaque (30, 82) dudit godet (40, 83) par rapport à ladite surface nominale.

10. Système selon l'une quelconque des revendications précédentes, dans lequel ledit système de navigation embarqué (28, 80) comprend en outre :

> un ordinateur de bord configuré pour calculer la différence entre une position réelle dudit bord d'attaque (30, 82) dudit godet (40, 83) et une surface nominale et configuré pour commander ladite position dudit bord d'attaque (30, 82) dudit godet (40, 83) en commandant des soupapes hydrauliques (47, 84) configurées pour actionner ledit bord d'attaque (30, 82) dudit godet (40, 83).

11. Système selon l'une quelconque des revendications précédentes, comprenant en outre :

> un poste de commande situé à distance (60, 88), configuré pour actionner à distance ladite excavatrice (14) ; et
> une liaison de communication (62, 90) configurée pour relier ledit poste de commande situé à distance (60, 88) et ledit système de navigation embarqué (28, 80) dudit Ex_3D_ILRPGS (10, 70) ;
> dans lequel ledit système de navigation embarqué (28, 80) est configuré pour transmettre des données de positionnement en temps réel de l'excavatrice audit poste de commande situé à distance (60, 88) par l'intermédiaire de ladite liaison de communication (62, 90) et dans lequel ledit système de navigation embarqué (28, 80) est configuré pour recevoir au moins un signal de commande dudit poste de commande situé à distance (60, 88) par l'intermédiaire de ladite liaison de communication (62, 90) ; et
> dans lequel ladite liaison de communication sans fil (62, 90) est choisie dans le groupe constitué par : une liaison cellulaire ; une radio ; une bande radio privée ; un réseau radio privé Site-Net 900 ; un Internet sans fil ; une liaison de communication sans fil par satellite ; et une liaison sans fil optique.

12. Système selon la revendication 11, dans lequel ledit poste de commande situé à distance (60, 88) comprend en outre :

> un afficheur (64, 92) configuré pour afficher ladite excavatrice (14) commandée à distance.

13. Procédé de fonctionnement d'une excavatrice (14) avec une précision verticale améliorée en utilisant un système de guidage par positionnement laser et radio intégré dans une excavatrice, Ex_3D_ILRPGS (10, 70), et en attribuant des fonctions de pondération à différentes mesures ; dans lequel ladite excavatrice (14) comprend en outre : un châssis (33) comprenant un élément formant cabine (32) pivotant horizontalement autour d'un élément de roulement (34), une flèche (36, 100) montée pivotante à une extrémité proximale sur ledit élément formant cabine (32) par un premier moyen de pivotement (42), une flèche secondaire (38) montée pivotante à une extrémité proximale sur une extrémité distale de ladite flèche (36, 100) par un deuxième moyen de pivotement (44), et un godet (40, 83) monté pivotant à une extrémité proximale sur une extrémité distale de ladite flèche secondaire (38, 102) par un troisième moyen de pivotement (46) ; dans lequel une extrémité distale dudit godet (40, 83) définit un bord d'attaque (30, 82) qui est utilisé pour excaver des déblais en réponse au mouvement dudit godet (40, 83) vers ledit châssis (33) ; ledit Ex_3D_ILRPGS (10, 70) comprenant : un récepteur de système de positionnement radio mobile (12, 96), un système de positionnement godet - corps de machine (16, 18, 98), un détecteur laser (24, 78) et un système de navigation embarqué (28, 80) ; ledit procédé consistant à :

> (A) obtenir un ensemble de mesures de coordonnées 3D de ladite excavatrice (14) en faisant une pluralité de mesures en utilisant ledit récepteur de système de positionnement radio mobile (12, 96) ;
> (B) obtenir des coordonnées de position de ladite flèche (36, 100), de ladite flèche secondaire (38, 102) et dudit godet (40, 83) de ladite excavatrice (14) en utilisant ledit système de positionnement godet - corps de machine (16, 18, 98) ;
> (C) obtenir un ensemble de mesures de coordonnées verticales locales avec une précision sensiblement élevée en faisant une pluralité de mesures en utilisant ledit détecteur laser (24, 78) configuré pour recevoir au moins un faisceau laser (26, 74, 76) d'un émetteur laser (50, 72) ;
> (D) sélectionner une fonction de pondération configurée pour attribuer une fonction de pondération 3D audit ensemble de mesures de coordonnées 3D obtenu en utilisant ledit récepteur de système de positionnement radio mobile (12, 96) et configurée pour attribuer une fonction de pondération verticale audit ensemble de mesures de coordonnées verticales locales obtenu en utilisant ledit détecteur laser (24, 78) ;

(E) intégrer ledit ensemble de mesures de coordonnées 3D de ladite excavatrice (14) avec ladite fonction de pondération 3D, et ledit ensemble de mesures de coordonnées verticales locales avec ladite fonction de pondération verticale en utilisant ledit système de navigation embarqué (28, 80) pour améliorer la précision verticale dudit récepteur de système de positionnement radio mobile (12, 96) ; et

(F) guider ledit bord d'attaque (30, 82) dudit godet (40, 83) de ladite excavatrice (14) avec une précision verticale améliorée en utilisant ledit système de navigation embarqué (28, 80).

14. Procédé selon la revendication 13, dans lequel ledit récepteur de système de positionnement radio mobile (12, 96) comprend en outre un récepteur de satellites et un récepteur de pseudolites ;

dans lequel ledit récepteur de satellites est configuré pour obtenir au moins une coordonnée de ladite excavatrice (14) ; et dans lequel ledit récepteur de pseudolites est configuré pour obtenir au moins une coordonnée de ladite excavatrice (14) ; et

dans lequel ladite étape (A) consistant à obtenir un ensemble de mesures de coordonnées 3D de ladite excavatrice (14) en utilisant ledit récepteur de système de positionnement radio mobile (12, 96) consiste en outre à :

(A1) choisir ledit récepteur de système de positionnement radio mobile (12, 96) dans le groupe constitué par : un récepteur de satellites autonome ; un récepteur de système de positionnement par satellites différentiel basé sur une station virtuelle de référence (Virtual Reference Station, VRS) ; un récepteur de système de positionnement par satellites différentiel basé sur un service de renforcement à couverture étendue (Wide Area Augmentation Service, WAAS) ; un récepteur de système de positionnement par satellites en temps réel (Real Time Kinematic, RTK) ; un récepteur de système de positionnement par satellites différentiel Omni STAR-High Performance (HP) ; et un récepteur de pseudolites ; et

(A2) choisir ledit récepteur de satellites dans le groupe constitué par : un récepteur de système de positionnement global (GPS) ; un récepteur GLONASS ; un récepteur GNSS (Global Navigation Satellite System) ; et un récepteur combiné GPS-GLONASS.

Mobile Radio Positioning System Receiver 12

Bucket-to-Machine-Body Positioning System 16

Display 29

On-Board Navigation System 28

63

36

42

40

30

18

44

38

20

47

24 Laser Detector

26 Laser Beam

50

Laser Transmitter

32

33

34

10

14

62

Control Station 60

Display 64

**FIG. 1**

23

EP 2 054 555 B1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006194823 A
- WO 2006062769 A2
- US 5404661 A
- US 6782644 B
- US 5602741 A
- US 6433866 B
- US 20060012777 A

### Non-patent literature cited in the description

- Global Positioning System: Theory and Applications; Volume II. PROGRESS IN ASTRONAUTICS AND AERONAUTICS. American Institute of Aeronautic and Astronautics, Inc, 1966, vol. 164